# EUROPÄISCHE PATENTSCHRIFT

(11) **EP 2 019 214 B1**
(45) Veröffentlichungstag und Bekanntmachung des Hinweises auf die Patenterteilung: **04.07.2012**
(21) Anmeldenummer: 08012929.9
(22) Anmeldetag: 17.07.2008
(51) Int. Cl.: F16B 37/06, F16B 4/00

(54) **Einpresselement zum Einpressen in ein nicht gelochtes oder gelochtes Bauteil sowie Verfahren zur Herstellung des Einpresselements**
Force fitting element for force fitting into a perforated or non-perforated component and method for producing same
Elément destiné à être inséré à force dans un composant non percé ou percé et procédé de fabrication d'un tel élément

(30) Priorität: 26.07.2007 DE 102007034987
(43) Veröffentlichungstag der Anmeldung: 28.01.2009
(73) Patentinhaber: PROFIL-Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- EP-A1- 0 784 161
- EP-A1- 0 856 670
- WO-A1-82/02579
- WO-A1-94/01688
- WO-A1-95/27147
- DE-U1- 29 522 323

## Beschreibung

Die vorliegende Erfindung betrifft ein Einpresselement und ein Verfahren zum Einpressen in ein nicht gelochtes oder vorgelochtes Bauteil, insbesondere ein Blechteil, sowie ein Verfahren zur Herstellung eines solchen Einpresselements.

Einpresselemente sind bekannt, beispielsweise aus der Schrift EP 0678679 B1. Dort wird ein in ein Blechteil einsetzbares Element beansprucht, das aus einem Schaftteil und einem einstückig daran geformten Kopfteil besteht, wobei das Element an seiner als Anlagefläche dienenden Unterseite konkave, umfangsmäßig geschlossene Felder sowie mindestens eine sich spiralförmig um das Schaftteil herum angeordnete Vertiefung aufweist. Die spiralförmige Vertiefung ist vorzugsweise durch eine Gewinderille gebildet und demzufolge auch von einem Gewindegang begrenzt, der als Ringwulst aufgefasst werden kann. Das Element kann als Mutterelement oder als Bolzenelement realisiert werden. Das dort beschriebene Element hat sich in der Praxis bewährt, ist aber nicht unbedingt für die Anwendung mit sehr dicken Blechteilen, beispielsweise mit einer Dicke von 4 mm oder größer geeignet.

Eine abgewandelte Variante des Elements ist ferner aus der EP 0958100 B1 bekannt, und zwar dort in Form eines Bolzenelements, das selbststanzend in ein Blechteil eingebracht werden kann, dass aber auch in ein vorgelochtes Blech einbringbar ist. Das Element ist insbesondere dafür geeignet, in relativ dünne Bleche eingesetzt zu werden, d.h. bis zu etwa 2 mm Dicke. Die Ausbildung des Elements im Bereich des Kopfteils entspricht weitgehend der Ausbildung des Elements gemäß der vorher genannten Schrift EP 0678679 B1.

Ferner soll an dieser Stelle auf die WO 94/01688 hingewiesen werden, die ein Einpressteil als Verbindungselement in Form eines Bolzens, einer Schraube oder eines nach Art einer Mutter wirksamen Innengewindeträgers ausgelegt ist, und zwar um eine auspress- und drehfeste Fügeverbindung mit einem Blechteil zu erreichen. Dabei weist das Element einen Kopfteil größeren Durchmessers auf mit einer zur Längsachse im Wesentlichen radialen Auflagefläche, einem einseitig in Achsrichtung über die Auflagefläche hinaus stehenden Schaftteil kleineren Durchmessers und im Übergangsbereich zwischen Kopfteil und Schaftteil eine zur Längsachse konzentrische radial nach außen offene Einschnürung als Ringraum für die Aufnahme des Blechmaterials. Die radial nach außen offene Einschnürung wird durch einen Ringvorsprung gebildet, der sich in radialer Richtung erstreckt und den Schaftteil umgibt.

Bei allen oben erläuterten bekannten Elementen wird das Blechmaterial radial in eine durch den Ringvorsprung oder Gewindegang gebildete Ringvertiefung bzw. Gewinderille durch eine unterhalb des Blechteils angeordnete Matrize hineinbewegt, die eine besondere Ausbildung hat, um diesen Materialfluss, d.h. in die radial offene Ringvertiefung und gegebenenfalls in die konkaven Felder zu bewerkstelligen. Diese Vorgehensweise ist bei Blechteilen bis etwa 2,5 oder 3 mm durchaus praktikabel. Wenn aber das Blechteil deutlich dicker wird, so ist es nicht oder kaum mehr möglich, Blechmaterial durch die Einwirkung einer Matrize in die entsprechende radiale Ringvertiefung hineinzuführen.

Auch sind aus den WO 95/27 147, WO 82/02579 und EP 0 856 670 Einpresselemente gemäß dem Oberbegriff des Anspruchs 1 bekannt.

Aufgabe der vorliegenden Erfindung ist es, hier Abhilfe zu schaffen und ein Element vorzusehen, das auch in dicken Blechteil verwendet werden kann, d.h. mit Blechdicken von 3 mm oder größer (aber gegebenenfalls auch in dünnere Blechteile) einsetzbar ist, aber dennoch dafür zu sorgen, dass Material des Blechteils in eine entsprechende Ringvertiefung des Elements hineingepresst werden kann, ohne eine besondere Ausbildung der Matrize erforderlich zu machen. Ferner soll das Element selbststanzend ausgeführt werden und es soll auch darüber hinaus einen guten Verdrehwiderstand gegenüber dem Blechteil ermöglichen, wenn das Element als Mutterelement oder als Bolzenelement ausgebildet ist.

Zur Lösung dieser Aufgabe wird erfindungsgemäß ein Einpresselement zum Einpressen in ein nicht gelochtes oder vorgelochtes Bauteil, insbesondere Blechteil, gemäß Anspruch 1.

Bei dem erfindungsgemäßen Einpresselement wird der Kopfteil des Elements daher mit einem ringförmigen Vorsprung ausgestattet, der beim Einpressen des Elements in das Blechteil selbst dafür sorgt, dass Material aus dem Blechteil in die zwischen diesem Vorsprung und dem Ringwulst des Halsteils des Elements gebildete Tasche hineingepresst wird. Da der Vorsprung unmittelbar mit der Oberfläche des Blechteils in Berührung kommt, und zwar benachbart zur Tasche, ist nur eine relativ beschränkte Materialverdrängung notwendig, um die Tasche mit Blechmaterial zu füllen und hierdurch den erforderlichen Auspresswiderstand zu erzeugen. Darüber hinaus erfolgt diese Materialverformung ohne eine besondere Form der Matrize notwendig zu machen. Es ist lediglich erforderlich, das Blechteil auf der ebenen Stirnseite einer Matrize abzustützen, um die Materialverdrängung durch Druck auf den Kopfteil des Elements und daher auf die Oberfläche des Blechteils zu erzeugen.

Der ringförmige Vorsprung am Kopfteil des Elements kann die genannte Bauteilanlageseite in eine radial äußere Ringfläche, die üblicherweise die Blechauflagefläche bildet und eine radial innere Ringfläche unterteilen, wobei die radial innere Ringfläche die genannte Tasche begrenzt bzw. mitbildet und ebenfalls als zusätzliche Auflagefläche dienen kann. Diese Konstruktion ist aber nicht zwingend erforderlich. Der ringförmige Vorsprung, der den Halsteil mit radialem Abstand umgibt, könnte auch radial außen am Kopfteil vorgesehen werden, wodurch die radial innerhalb des ringförmigen Vorsprungs liegende Fläche des Kopfteils die Blechauflagefläche bildet und zugleich die genannte Tasche begrenzt.

Erfindungsgemäß sind am Halsteil Verdrehungsrippen vorgesehen, die sich in Richtungen parallel zu der mittleren Längsachse des Einpresselements erstrecken, wobei sie an ihren dem Kopfteil zugewandten Enden am Ringwulst des Halsteils zu Ende gehen.

Besonders günstig ist es, wenn das Element sich in axialer Richtung erstreckende Verdrehsicherungsrippen aufweist, die beim Einpressen in das Blechteil entsprechende Nuten in der Lochwand des Loches des Blechteils bilden und für eine notwendige Verdrehsicherung sorgen. Dabei ist das Einpresselement so hergestellt, dass mittels einer geeigneten Kaltschlagmatrize Material aus einem ursprünglich zylindrischen Halsteil in Richtung des Kopfteils verschoben wird, und zwar an mehreren diskreten Stellen um den Halsteil herum, so dass zwischen diesen Stellen Verdrehsicherungsrippen verbleiben und das so verschobene Material Ringsegmente des Ringwulstes bilden. Auf diese Weise wird ein stellenweise unterbrochener Ringwulst ausgebildet. Aufgrund der gewählten axialen Länge der Verdrehsicherungsrippen, die sich beispielsweise über die Hälfte der Länge des Halsteils erstrecken können (wobei diese Aussage keinesfalls als beschränkend anzusehen ist, da die Verdrehsicherungsrippen auch länger oder kürzer sein können), können die Ringsegmente des Ringwulstes mit einer radialen Abmessung ausgebildet werden, die die radiale Abmessung der Verdrehsicherungsrippen deutlich übersteigt. An den Stellen der Verdrehsicherungsrippen ist dann der Ringwulst weniger ausgeprägt ausgebildet, d.h. es sind an diesen Stellen Vertiefungen im Ringwulst festzustellen, die aber nicht weiter stören, sondern lediglich den Eindruck geben, dass der Ringwulst an den entsprechenden Stellen unterbrochen ist. Sogar können diese unterbrochenen Stellen eine zusätzliche Verdrehsicherung erzeugen.

Das Element kann als Mutterelement ausgebildet werden und weist dann ein durch den Kopfteil und den Halsteil sich hindurch erstreckendes Gewinde auf. Alternativ hierzu kann das Element mit einem Schaftteil versehen werden und somit als Bolzenelement ausgebildet werden. Hierfür sind zwei verschiedene Möglichkeiten gegeben. Einmal kann sich der Schaftteil von der dem Halsteil abgewandten Stirnseite des Kopfteils wegerstrecken oder sich von der dem Kopfteil abgewandten Stirnseite des Halsteils wegerstrecken.

Erfindungsgemäß ist das Element ohne weiteres selbststanzend ausgebildet, d.h. dass das freie Ende des Halsteils, d.h. das dem Kopfteil abgewandte Ende des Halsteils, mit einer scharfen Stanzkante vorgesehen ist, die dem Heraustrennen eines Stanzbutzens aus dem Blechmaterial dient. Diese beiden Varianten des Einpresselements können aber auch in vorgestanzten Blechteilen eingesetzt werden, d.h. das Loch zur Aufnahme des Einpresselements wird vorgestanzt.

Bei der dritten Variante, d.h. mit Ausbildung des Elements als Bolzenelement mit einem Schaftteil, der sich von der dem Kopfteil abgewandten Stirnseite des Halsteils wegerstreckt, ist es schwierig, das Blechteil mit dem Schaftteil zu durchlochen, da hierdurch das Schaftteil beschädigt werden kann, insbesondere dann, wenn es sich um ein Bolzenelement mit Gewinde handelt. Dennoch ist es denkbar, das Blechteil vorzulochen, und zwar mit einem Durchmesser, der geringer ist als der Aussendurchmesser des Halsteils im Bereich der Stanzkante. Das Element könnte dann so eingesetzt werden, dass das freie Ende des Halsteils, das als Stanzkante ausgebildet ist, einen zylinderförmigen Butzen aus dem Blechteil heraustrennt und hierdurch das Blechteil entsprechend kalibriert. Beim Eindrücken des Halsteils in das Blechteil bilden die Verdrehsicherungsrippen entsprechende Nuten in der Lochwand ab. Ein Bolzenelement dieser Art hat auch den Vorteil, dass die Vorlochung nicht unbedingt 100 % genau vorgenommen werden muss, da durch das Ausstanzen eines zylinderförmigen Stanzbutzens dieser eine gewisse Asymmetrie aufweisen kann. Mit anderen Worten können die Toleranzen bei einer solchen Ausführungsvariante durchaus großzügig bemessen werden, was das Verfahren insgesamt preisgünstiger macht.

Weitere bevorzugte Ausführungsbeispiele sind den Unteransprüchen zu entnehmen.

Die Erfindung wird nachfolgend näher erläutert anhand von Ausführungsbeispielen und unter Bezugnahme auf die Zeichnungen, welche zeigen:
- Fig. 1: eine teilweise geschnittene Darstellung eines Einpressele- ments in Form eines Mutterelements,
- Fig. 2: eine teilweise geschnittene Darstellung eines erfindungsgemä- ßen Einpresselements in Form eines Bolzenelements,
- Fig. 3: eine weiteres erfindungsgemäßes Beispiel für ein als Bolzen- element realisiertes Einpresselement, auch hier in einer teil- weise geschnittenen Darstellung,
- Fig. 4A-4D: eine Skizzenreihe zur Darstellung der Herstellung eines erfin- dungsgemäßen Einpresselements mittels Kaltschlagen und
- Fig. 5: eine Darstellung entsprechend der Fig. 1, jedoch mit dem Einpresselement in ein Blechteil eingepresst.

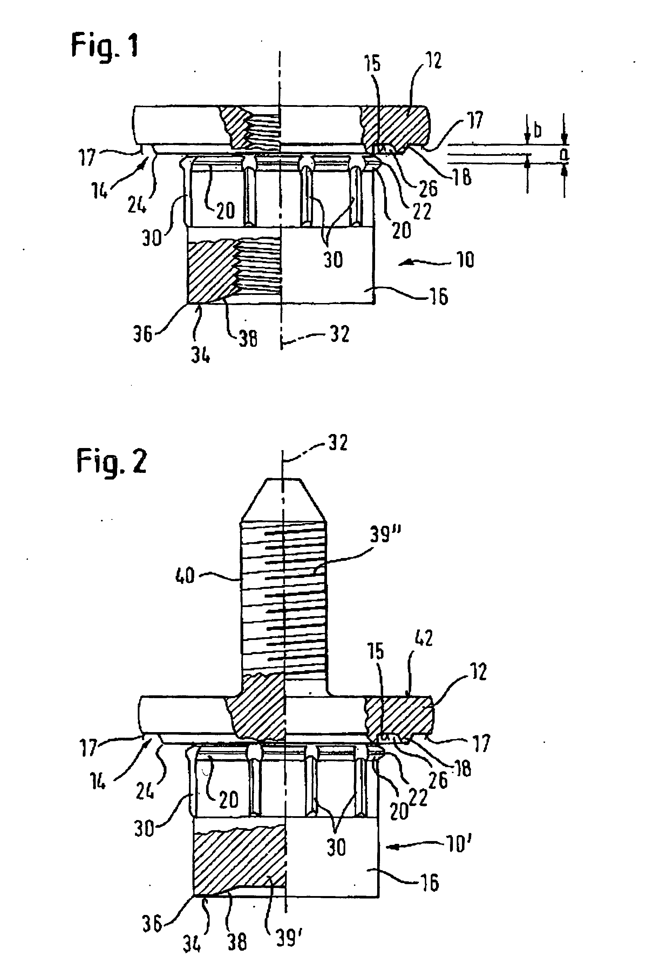

Ein erfindungsgemäßes Einpresselement 10 zum Einpressen in ein nicht gelochtes oder vorgelochtes Bauteil, insbesondere Blechteil, ist in Fig. 1 gezeigt, wobei das Einpresselement 10 einen Kopfteil 12 mit einer dem Bauteil zugewandten Ringfläche 15 und einen Halsteil 16 aufweist, der von der Ringfläche 15, d.h. von der Bauteilanlageseite 14 wegragt, wobei der Kopfteil ferner einen den Halsteil mit radialem Abstand umgebenden, von der Ringfläche wegragenden ringförmigen Vorsprung 18 aufweist und der Halsteil einen radial nach außen ragenden Ringwulst 20 aufweist, der als kontinuierlicher Ringwulst oder als ein stellenweise unterbrochener Ringwulst (wie in Fig. 1 gezeigt) ausgebildet sein kann, dessen Spitze 22 einen axialen Abstand a von der Ringfläche 15 hat, der größer ist als der axiale Abstand b der Spitze 24 des ringförmigen Vorsprungs 18 von der Ringfläche 15, die radial innerhalb dieses Vorsprungs liegt und mit diesem und dem Ringwulst eine Material des Bauteils aufnehmende Tasche 26 bildet.

Bei der Ausführung gemäß Fig. 1 ist die Bauteilanlageseite 14 in eine radial äußere Ringfläche 17 und eine radial innere Ringfläche 15 unterteilt, die radial innerhalb bzw. außerhalb des ringförmigen Vorsprungs 18 angeordnet sind. Dies ist aber nicht zwingend erforderlich, der Vorsprung 18 könnte auf der Bauteilanlageseite 14 radial außen am Kopfteil 12 angeordnet werden.

Bei der dargestellten Ausführung sind Verdrehsicherungsrippen 30 am Halsteil 16 vorgesehen und sie gehen an ihren dem Kopfteil zugewandten Enden am Ringwulst 18 des Halsteils 16 zu Ende. Ferner erstrecken sich die Verdrehsicherungsrippen 30 über etwa die Hälfte der axialen Länge des Halsteils 16. Dabei erstrecken sich Verdrehsicherungsrippen in Richtungen parallel zu der mittleren Längsachse 32 des Einpresselements. Sie sind vorzugsweise regelmäßig am Halsteil 16 um die mittlere Längsachse 32 herum angeordnet.

Das freie Stirnende 34 des Halsteils, d.h. das Ende, das dem Kopfteil abgewandt ist, ist als Stanzabschnitt ausgebildet, wobei die umlaufende Kante 36 des Halsteils 16 radial außen am freien Stirnende 34 als scharfe Stanzkante ausgebildet ist. Ferner weist das freie Stirnende 34 des Halsteils eine konische Vertiefung 38 auf mit einem relativ flachen eingeschlossenen Konuswinkel, der beispielsweise im Bereich zwischen 170 und 90° liegt.

Bei der Ausführungsform gemäß Figl. 1 ist das Einpresselement als hohles Element ausgebildet und ist in dieser Ausführung mit einem Innengewinde 39 versehen.

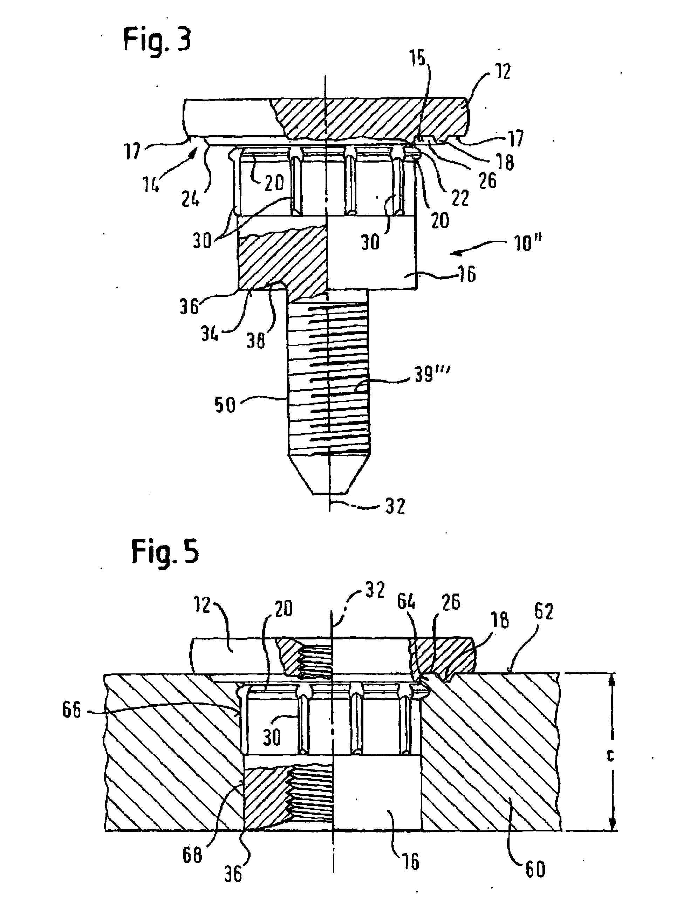

Alternativ hierzu kann das Einpresselement - wie in Fig. 2 gezeigt - als Bolzenelement 10' ausgebildet sein und weist dann einen Schaftteil 40 auf, der auf der dem Halsteil 16 abgewandten Seite 42 des Kopfteils 12 angeordnet ist. Ansonsten entspricht die Ausbildung des Kopfteils 12 und des Halsteils weitestgehend der der Ausführung gemäß Fig. 1 mit Ausnahme des fehlenden Innengewindes 39 (das durch eine massive Ausbildung des Kopfteils mit Boden 39' ersetzt worden ist), weshalb die gleichen Bezugszeichen in Fig. 2 wie in Fig. 1 in diesem Bereich verwendet worden sind und die bisherige Beschreibung ebenfalls für die Ausführung gemäß Fig. 2 gilt und deshalb nicht wiederholt wird. Dies gilt auch für die Ausführung gemäß Fig. 3. In Fig. 3 wird ein Einpresselement 10" als Bolzenelement gezeigt, mit einem Schaftteil 50, der auf der dem Kopfteil abgewandten Stirnseite 34 des Halsteils 16 angeordnet ist, wobei der Schaftteil 50 einen kleineren Durchmesser als der Außendurchmesser des Halsteils 16 aufweist.

Sowohl bei der Ausführung gemäß Fig. 2 als auch bei der Ausführung gemäß Fig. 3 ist der Schaftteil 40 bzw. 50 mit einem Außengewinde 39", 39"' versehen.

Bei der Anbringung des Einpresselements gemäß Fig. 1 an ein Blechteil entsteht ein Zusammenbauteil gemäß Fig. 5, wobei der von der Ringfläche wegragende ringförmige Vorsprung in die Oberfläche 62 des Blechteils eingedrückt ist und dass hierdurch verdrängtes Material 64 sich in der Tasche 28 befindet. Hierdurch ist das Einpresselement auspresssicher im Blechteil verankert. Das Einpresselement 10 ist in dieser Ausführung selbststanzend in das Blechteil eingepresst worden, d.h. die Stanzkante 36 hat einen zylindrischen Stanzbutzen aus dem Blechteil herausgetrennt (nicht gezeigt), das auf einer (ebenfalls nicht gezeigten) Matrize angeordnet ist, die ein kreiszylindrisches Loch mit einen Durchmesser entsprechend dem Außendurchmesser des Halsteils 16 aufweist. Das Einpresselement könnte aber auch in ein vorgelochtes oder vorgebohrtes Blechteil eingesetzt werden.

Bei dem Zusammenbauteil gemäß Fig. 5 sind dass die Verdrehsicherungsrippen 30, die radial außen am Halsteil 16 vorgesehen sind, in entsprechende Verdrehsicherungsnuten 66 in der Lochwand 68 des gelochten Blechteils 60 angeordnet sind.

Die Dicke des Blechteils 60 im Bereich der Anbringung des Einpresselements entspricht in etwa dem Abstand c zwischen der genannten Ringfläche 15 des Kopfteils und dem freien Stirnende 34 des Halsteils 16, d.h. der axialen Länge des Halsteils, ist aber üblicherweise geringfügig kleiner, damit das Blechteil vollständig durchbohrt wird. Die bisherige Beschreibung des Zusammenbauteils gilt weitestgehend auch für ein Zusammenbauteil, das unter Anwendung des Einpresselements gemäß Fig. 2 oder Fig. 3 entsteht. Bei einer Ausführung des Zusammenbauteils gemäß Fig. 3 wäre es aber schwierig, das Loch im Blechteil mittels des Einpresselements zu stanzen, da das Gewinde 39'" des Schaftteils dies eher verhindert. Das Blechteil musste also in diesem Fall vorgelocht oder vorgebohrt werden, entweder mit einem Durchmesser, der dem des Halsteils 16 entspricht oder etwas kleiner, jedoch größer als der Außendurchmesser des Schaftteils. In diesem Fall könnte die scharfe Stanzkante 36 einen hohlzylindrischen Stanzbutzen aus dem Bauteil herausstanzen.

In einem praktischen Beispiel eines Einpresselements entsprechend der Fig. 1 mit einem Innengewinde der Größe M8 könnte der Halsteil eine axiale Länge von 7.2 mm und einen Außendurchmesser von 13.6 mm haben und selbststanzend in ein Blechteil mit einer Dicke von 7 mm eingesetzt werden. Dabei beträgt der Abstand a 1 mm und der Abstand b etwas 1,5 mm. Der Außendurchmesser des Kopfes könnte etwa 16 mm betragen und dessen Dicke (axiale Höhe) 3 mm.

Das Verfahren zur Herstellung eines Einpresselements gemäß der vorliegenden Beschreibung erfolgt dadurch, dass der Ringwulst durch axiales Verschieben von Material des Halsteils ausgebildet wird.

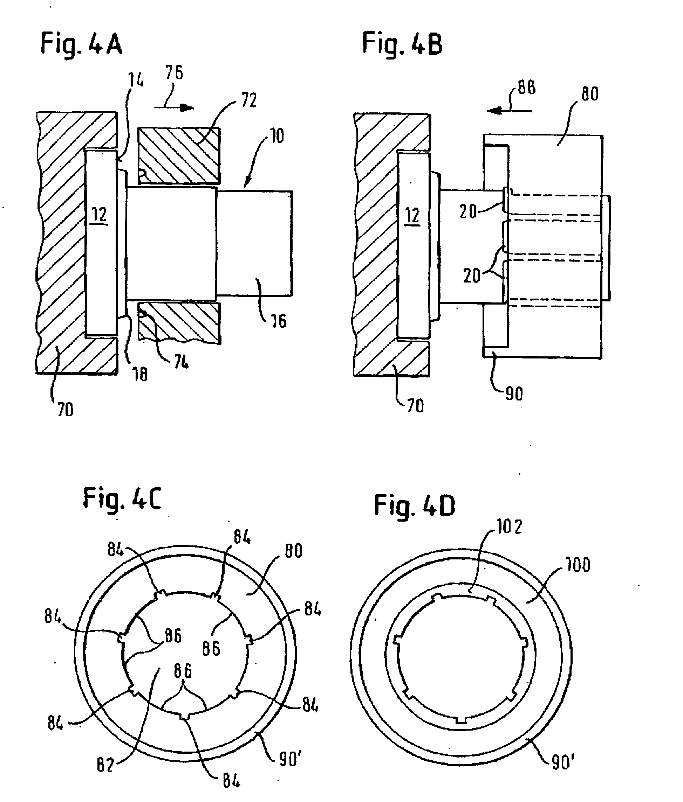

Fig. 4A zeigt einen Rohling für das Einpresselement 10 gemäß Fig. 1, wobei der Kopfteil 12 des Elements in einem Halter 70 einer Kaltschlagmaschine angeordnet ist. Das Bezugszeichen 72 deutet auf ein Werkzeug, das gerade gegen die Bauteilanlageseite 14 des Kopfteils 12 gepresst wurde, um den ringförmigen Vorsprung 18 auszubilden. Zu diesem Zweck hat das Werkzeug 72 eine entsprechend Vertiefung 74 in seiner dem Kopfteil zugewandten Stirnseite. Da der Ringvorsprung 18 fertiggestellt ist, wird in der Darstellung gemäß Fig. 4A das Werkzeug 72 entsprechend dem Pfeil 76 vom Halter 70 entfernt. Fig. 4B zeigt dann eine Darstellung ähnlich der Fig. 4A, wobei aber ein weiteres Werkzeug 80 jetzt zur Anwendung gelangt, und zwar mit einer Ausbildung, die in Draufsicht in Fig. 4C gezeigt ist. Man merkt, dass das Werkzeug 80 einen zylindrischen Bereich 82 hat, der auf dem Halsteil 16 des Rohlings geführt wird, und dass in der zylindrischen Wandung der zylindrischen Ausnehmung 82 Längsnuten 84 vorgesehen sind. Zwischen den Längsnuten 84 befinden sich kreisförmige Abschnitte 86, wobei die kreisförmigen Abschnitte 86 bei Bewegung des Werkzeugs 80 in Pfeilrichtung 88 auf den Halter 70 zu dafür sorgen, dass Material vom geringfügig größeren Bereich des Halsteils 16 weggeschabt wird, um den Ringwulst 20 auszubilden bzw. in diesem Falle Ringwulstsegmente 20, die stellenweise durch Verdrehsicherungsrippen voneinander beabstandet sind, die bei der Bewegung 88 des Werkzeugs 80 durch die Nuten 84 ausgebildet werden. Wenn das Werkzeug 80 seine maximale Annäherung an den Halter 70 erreicht hat, was durch den Abstandsring 90 begrenzt wird, ist die Herstellung der Verdrehsicherungsrippen 30 an den Stellen der Nuten 84 und die rohe Form des Vorsprungs 20 fertig. Das Werkzeug 80 wird dann für ein weiteres Werkzeug 100 ausgetauscht, das in Stirnansicht in Fig. 4D gezeigt ist. Dieses Werkzeug entspricht weitestgehend dem Werkzeug gemäß Fig. 4B, jedoch mit der Ausnahme, dass eine konusförmige Fläche 102 vorgesehen ist, die dazu führt, dass der Ringwulst 20 die Ausbildung mit Spitze 22 erhält, die in Fig. 1 gezeigt ist.

Auch hier ist ein Abstandsring 90' vorgesehen, der die gleiche Wirkung hat wie der Abstandsring 90 gemäß Fig. 4B und Fig. 4C. Obwohl die Nuten 84 hier als rechteckige Nuten gezeigt sind, könnten sie auch beispielsweise mit einem dreieckigen Querschnitt vorgesehen werden, wodurch Verdrehsicherungsrippen mit einem ebenfalls rechteckigen Querschnitt entstehen, wie in Fig. 1 gezeigt.

Bei allen Ausführungsformen können als Beispiel für den Werkstoff des Einpresselements alle Materialien genannt werden, die im Rahmen der Kaltverformung die Festigkeitswerte der Klasse 8 gemäß ISO-Standard oder höher erreichen, beispielsweise eine 35 B2-Legierung gemäß DIN 1654. Die so gebildeten Befestigungselemente eignen sich unter anderem für alle handelsüblichen Stahlwerkstoffe für ziehfähige Blechteile wie auch für Aluminium oder dessen Legierungen.

## Patentansprüche

1. Einpresselement (10; 10'; 10") zum Einpressen in ein nicht gelochtes oder vorgelochtes Bauteil, insbesondere Blechteil (60), wobei das Einpresselement einen Kopfteil (12) mit einer dem Bauteil zuzuwendenden Ringfläche (15) und einen Halsteil aufweist, der von der Ringfläche (15), d.h. von der Bauteilanlageseite (14) wegragt, wobei der Kopfteil ferner einen den Halsteil mit radialem Abstand umgebenden, von der Ringfläche wegragenden ringförmigen Vorsprung (18) aufweist und der Halsteil einen radial nach außen ragenden Ringwulst (20) aufweist, dessen Spitze (22) einen axialen Abstand (a) von der Ringfläche (15) hat, der größer ist als der axiale Abstand (b) der Spitze des ringförmigen Vorsprungs von der Ringfläche, die radial innerhalb dieses Vorsprungs liegt und mit diesem und dem Ringwulst (20) eine Material des Bauteils (60) aufnehmende Tasche (26) bildet,
**dadurch gekennzeichnet,**
**dass** das freie Stirnende (34) des Halsteils (16), d.h. das Ende, das dem Kopfteil (12) abgewandt ist, als Stanzabschnitt ausgebildet ist, wobei die umlaufende Kante (36) des Halsteils (16) vorzugsweise radial außen am freien Stirnende (34) als scharfe Stanzkante ausgebildet ist,
**dass** Verdrehsicherungsrippen (30) am Halsteil (16) vorgesehen sind dass die Verdrehsicherungsrippen sich in Richtungen parallel zu der mittleren Längsachse (32) des Einpresselements (10; 10'; 10") erstrecken und
**dass** die Verdrehsicherungsrippen (30) an ihren dem Kopfteil (12) zugewandten Enden am Ringwulst (20) des Halsteils (16) zu Ende gehen.

2. Einpresselement nach Anspruch 1,
**dadurch gekennzeichnet,**
**dass** die Bauteilanlageseite (14) in eine radial äußere Ringfläche (17) und eine radial innere Ringfläche (15) unterteilt ist, die radial innerhalb bzw. außerhalb des ringförmigen Vorsprungs (18) angeordnet sind.

3. Einpresselement nach Anspruch 1,
**dadurch gekennzeichnet,**
**dass** die Verdrehsicherungsrippen (30) sich über etwa die Hälfte der axialen Länge des Halsteils (16) erstrecken,

4. Einpresselement nach einem der vorhergehenden Ansprüche,
**dadurch gekennzeichnet,**
**dass** die Verdrehsicherungsrippen regelmäßig am Halsteil um die mittlere Längsachse herum angeordnet sind.

5. Einpresselement nach einem der vorhergehenden Ansprüche,
**dadurch gekennzeichnet,**
**dass** das freie Stirnende (34) des Halsteils (16) eine konische Vertiefung (38) aufweist mit einem relativ flachen eingeschlossenen Konuswinkel, der beispielsweise im Bereich zwischen 170° und 90° liegt.

6. Einpresselement (10) nach einem der vorhergehenden Ansprüche, **dadurch gekennzeichnet,**
**dass** es als hohles Element ausgebildet ist, das gegebenenfalls mit einem Innengewinde (39) versehen ist.

7. Einpresselement nach einem der vorhergehenden Ansprüche 1 bis 5, **dadurch gekennzeichnet,**
**dass** das Einpresselement (10') als Bolzenelement (10') ausgebildet ist und einen Schaftteil (40) aufweist, der auf der dem Halsteil (16) abgewandten Seite des Kopfteils (12) angeordnet ist und/oder auf der dem Kopfteil (12) abgewandten Stirnseite des Halsteils angeordnet ist, wobei der Schaftteil (50) einen kleineren Durchmesser als der Außendurchmesser des Halsteils (16) aufweist.

8. Einpresselement gemäß Anspruch 7,
**dadurch gekennzeichnet,**
**dass** der Schaftteil (10'; 10") mit einem Außengewinde (39"; 39"') versehen ist.

9. Einpresselement nach einem der vorhergehenden Ansprüchen,
**dadurch gekennzeichnet,**
**dass** der Ringwulst als ein stellenweise unterbrochener Ringwulst ausgebildet ist.

10. Zusammenbauteil bestehend aus einem Einpresselement nach einem der vorhergehenden Ansprüche und einem Blechteil,
**dadurch gekennzeichnet,**
**dass** der von der Ringfläche wegragende ringförmige Vorsprung (18) in die Oberfläche (62) des Blechteils (60) eingedrückt ist und dass hierdurch verdrängtes Material (64) sich in der Tasche (26) befindet und dass die Verdrehsicherungsrippen (30), die radial außen am Halsteil vorgesehen sind, in entsprechende Verdrehsicherungsnuten (66) in der Lochwand (68) des gelochten Blechteils (60) angeordnet sind.

11. Zusammenbauteil nach Anspruch 10,
**dadurch gekennzeichnet,**
**dass** die Dicke des Blechteils (60) im Bereich der Anbringung des Einpresselements in etwa dem Abstand (c) zwischen der genannten Ringfläche (15) des Kopfteils und dem freien Stirnende (34) des Halsteils (16) entspricht, d.h. der axialen Länge des Halsteils.

12. Verfahren zur Herstellung eines Einpresselements gemäß einem der vorhergehenden Ansprüche 1 bis 8, wobei der Ringwulst (20) durch axiales Verschieben von Material des Halsteils (16) ausgebildet wird und vor dem Verschieben des Materials des Halsteils, um den Ringwulst auszubilden, der Kopfteil in einer Kaltschlagmaschine bearbeitet wird, um den ringförmigen Vorsprung auszubilden,
**dadurch gekennzeichnet,**
**dass** die Verdrehsicherungsrippen während des Verschiebens von Material des Halsteils, um den Ringwulst auszubilden, ausgebildet werden.

13. Verfahren zur Anbringung des Einpresselements nach einem der vorhergehenden Ansprüche 1 bis 9 in einem nicht gelochten oder vorgelochten Blechteil ,
**dadurch gekennzeichnet,**
**dass** durch die Ausbildung des Halsteils mit einem Stanzabschnitt am freien Ende des Halsteils dieser Abschnitt verwendet wird, um ein nicht gelochtes Blechteil zu lochen bzw. bei einem gelochten Blechteil, um die Lochgröße zu kalibrieren.

## Claims

1. A press-in element (10; 10'; 10") for pressing into a non-pierced or pre-pierced component, in particular a sheet metal part (60), wherein the press-in element has a head part (12) having a ring surface (15) which can be directed at the component and a neck part which projects away from the ring surface (15), i.e. from the component contact side (14), wherein the head part further has a ring-like projection (18) surrounding the neck part with a radial spacing and projecting away from the ring surface and the neck part has a radially outwardly projecting ring bead (20), with the apex (22) of the ring bead having an axial spacing (a) from the ring surface (15) which is larger than the axial spacing (b) of the apex of the ring-like projection from the ring surface, which lies radially within this projection and together with it and the ring bead (20) forms a pocket (26) which receives material of the component (60),
**characterized in that**
the free end (34) of the neck part (16), i.e. the end which is remote from the head part (12), is formed as a piercing section, wherein the peripherally extending edge (36) of the neck part (16) is preferably formed radially outwardly at the free end (34) as a sharp piercing edge,
**in that** ribs (30) providing security against rotation are provided at the neck part (16), **in that** the ribs providing security against rotation extend in directions parallel to the central longitudinal axis (32) of the press-in element (10; 10'; 10").

2. A press-in element in accordance with claim 1,
**characterized in that**
the component contact side (14) is subdivided into a radially outer ring surface (17) and a radially inner ring surface (15) which are disposed radially outside and inside of the ring-like projection (18) respectively.

3. A press-in element in accordance with claim 1,
**characterized in that**
the ribs (30) providing security against rotation extend over approximately half the axial length of the neck part (16).

4. A press-in element in accordance with any one of the preceding claims,
**characterized in that**
the ribs providing security against rotation are arranged regularly at the neck part around the central longitudinal axis.

5. A press-in element in accordance with any one of the preceding claims,
**characterized in that**
the free end (34) of the neck part (16) has a conical recess (38) with a relatively shallow enclosed cone angle which, for example, lies in the range between 170° and 90°.

6. A press-in element (10) in accordance with any one of the preceding claims,
**characterized in that**
it is formed as a hollow element which may be formed with an internal thread (39).

7. A press-in element in accordance with any one of the preceding claims 1 to 5,
**characterized in that**
the press-in element (10') is formed as a bolt element (10') and has a shaft part (40) which is arranged at the side of the head part (12) remote from the neck part (16), and/or is arranged at the side of the neck part remote from the head part (12), with the shaft part (50) having a smaller diameter than the outer diameter of the neck part (16).

8. A press-in element in accordance with claim 7,
**characterized in that**
the shaft part (10'; 10") is provided with an external thread (39"; 39"').

9. A press-in element in accordance with any one of the preceding claims,
**characterized in that**
the ring bead is formed as a ring bead interrupted at points.

10. A component assembly consisting of a press-in element in accordance with any one of the preceding claims and a sheet metal part,
**characterized in that**
the ring-like projection (18) projecting away from the ring surface is pressed into the surface (62) of the sheet metal part (60) and **in that** the hereby displaced material (64) is located in the pocket (26), and **in that** the ribs (30) providing security against rotation which are provided radially outwardly at the neck part are arranged in corresponding grooves (66) providing security against rotation in the hole wall (68) of the pierced sheet metal part (60).

11. A component assembly in accordance with claim 10,
**characterized in that**
the thickness of the sheet metal part (60) in the region of the attachment of the press-in element corresponds approximately to the spacing (c) between the said ring surface (15) of the head part and the free end (34) of the neck part (16), i.e. to the axial length of the neck part.

12. A method for the manufacture of a press-in element in accordance with any one of the preceding claims 1 to 8, wherein the ring bead (20) is formed by axial displacement of material of the neck part (16) and prior to the displacement of the material of the neck part in order to form the ring bead, the head part is processed in a cold heading machine in order to form the ring-like projection,
**characterized in that**
the ribs providing security against rotation are formed during the displacement of material of the neck part in order to form the ring bead.

13. A method for the attachment of a press-in element in accordance with any one of the preceding claims 1 to 9 into a non-pierced or pre-pierced sheet metal part,
**characterized in that**
through the formation of the neck part with a piercing section at the free end of the neck part this section is used in order to pierce a non-pierced sheet metal part or to calibrate the hole size in a pierced sheet metal part.

## Revendications

1. Élément à enfoncer à la presse (10 ; 10' ; 10") destiné à être enfoncé dans un composant non percé ou prépercé, en particulier une pièce en tôle (60), l'élément à enfoncer à la presse comprenant une partie de tête (12) avec une surface annulaire (15) destinée à être tournée vers le composant, et une partie formant col, qui fait saillie depuis la surface annulaire (15), c'est-à-dire depuis le côté d'appui (14) contre le composant, ladite partie de tête comprenant en outre une saillie de forme annulaire (18) qui entoure la partie formant col avec une distance radiale et qui fait saillie depuis la surface annulaire, et la partie formant col comprend un bourrelet annulaire (20) en saillie radiale vers l'extérieur, dont la pointe (22) présente depuis la surface annulaire (15) une distance axiale (a) qui est plus grande que la distance axiale (b) de la pointe de la saillie annulaire depuis la surface annulaire et se trouve radialement à l'intérieur de cette saillie en formant avec celle-ci et avec le bourrelet annulaire (20) une poche (26) qui reçoit du matériau du composant (60),
**caractérisé en ce que**
l'extrémité frontale libre (34) de la partie formant col (16), c'est-à-dire l'extrémité qui est détournée de la partie de tête (12), est réalisée sous forme de tronçon poinçonné, et l'arête périphérique (36) de la partie formant col (16) est de préférence réalisée radialement à l'extérieur sur l'extrémité frontale libre (34) sous la forme d'une arête poinçonnée acérée,
**en ce que** des nervures antirotation (30) sont prévues sur la partie formant col (16),
**en ce que** les nervures antirotation s'étendent parallèlement à l'axe longitudinal médian (32) de l'élément à enfoncer à la presse (10 ; 10' ; 10"), et
**en ce que** les nervures antirotation (30) se terminent, à leurs extrémités tournées vers la partie de tête (12), au niveau du bourrelet annulaire (20) de la partie formant col (16).

2. Élément à enfoncer à la presse selon la revendication 1,
**caractérisé en ce que** le côté d'appui (14) contre le composant est subdivisé en une surface annulaire radialement extérieure (17) et une surface annulaire radialement intérieure (15), qui sont agencées respectivement radialement à l'intérieur et à l'extérieur de la saillie de forme annulaire (18).

3. Élément à enfoncer à la presse selon la revendication 1,
**caractérisé en ce que** les nervures antirotation (30) s'étendent approximativement sur la moitié de la longueur axiale de la partie formant col (16).

4. Élément à enfoncer à la presse selon l'une des revendications précédentes,
**caractérisé en ce que** les nervures antirotation sont agencées régulièrement sur la partie formant col tout autour de l'axe longitudinal médian.

5. Élément à enfoncer à la presse selon l'une des revendications précédentes,
**caractérisé en ce que** l'extrémité frontale libre (34) de la partie formant col (16) comporte un renfoncement conique (38) avec un angle conique inclus relativement plat, qui tombe par exemple dans la plage entre 170° et 90°.

6. Élément à enfoncer à la presse (10) selon l'une des revendications précédentes,
**caractérisé en ce qu'**il est réalisé sous forme d'élément creux, qui est pourvu le cas échéant d'un taraudage (39).

7. Élément à enfoncer à la presse selon l'une des revendications précédentes 1 à 5, **caractérisé en ce que**
l'élément à enfoncer à la presse (10') est réalisé sous forme d'élément de goujon (10'), et présente une partie de tronc (40) qui est agencée sur le côté de la partie de tête (12) détournée de la partie formant col (16) et/ou qui est agencée sur le côté frontal de la partie formant col détourné de la partie de tête (12), ladite partie de tronc (50) présentant un diamètre plus petit que le diamètre extérieur de la partie formant col (16).

8. Élément à enfoncer à la presse selon la revendication 7,
**caractérisé en ce que** la partie de tronc (10' ; 10") est pourvue d'un filetage (39" ; 39"').

9. Élément à enfoncer à la presse selon l'une des revendications précédentes,
**caractérisé en ce que** le bourrelet annulaire est réalisé sous forme d'un bourrelet annulaire localement interrompu.

10. Composant assemblé constitué d'un élément à enfoncer à la presse selon l'une des revendications précédentes et d'une pièce en tôle, **caractérisé en ce que** la saillie annulaire (18) qui dépasse de la surface annulaire est enfoncée dans la surface (62) de la pièce en tôle (60) et **en ce que** le matériau (64) refoulé par cet enfoncement se trouve dans la poche (26), et **en ce que** les nervures antirotation (30), qui sont prévues radialement à l'extérieur sur la partie formant col, sont agencées dans des rainures antirotation (66) de la paroi percée (68) de la pièce en tôle percée (60).

11. Composant assemblé selon la revendication 10,
**caractérisé en ce que** l'épaisseur de la pièce en tôle (60) dans la zone de l'application de l'élément à enfoncer à la presse correspond approximativement à la distance (c) entre la surface annulaire précitée (15) de la partie de tête et l'extrémité frontale libre (34) de la partie formant col (16), c'est-à-dire à la longueur axiale de la partie formant col.

12. Procédé pour la fabrication d'un élément à enfoncer à la presse selon l'une des revendications précédentes 1 à 8, dans lequel le bourrelet annulaire (20) est réalisé par déplacement axial du matériau de la partie formant col (16) et, avant le déplacement du matériau de la partie formant col, afin de réaliser le bourrelet annulaire, la partie de tête est oeuvrée dans une machine de frappe à froid, afin de réaliser la saillie annulaire,
**caractérisé en ce que** les nervures antirotation sont réalisées pendant le déplacement du matériau de la partie formant col afin de réaliser le bourrelet annulaire.

13. Procédé pour appliquer l'élément à enfoncer à la presse selon l'une des revendications 1 à 9 dans une pièce en tôle non percée ou prépercée,
**caractérisé en ce que** du fait de la réalisation de la partie formant col avec un tronçon poinçonné à l'extrémité libre de la partie formant col, ce tronçon est utilisé afin de percer une pièce en tôle non percée, ou respectivement de calibrer la taille du perçage dans le cas d'une pièce en tôle percée.
